# EUROPEAN PATENT APPLICATION

(11) **EP 0 842 826 A1**
(43) Date of publication of application: **20.05.1998**
(21) Application number: 97309044.2
(22) Date of filing: 11.11.1997
(51) Int. Cl.: B60R 21/20

(54) **Automotive steering wheel with airbag and horn switch**

(30) Priority: 19.11.1996 US 752358
(71) Applicant: Autoliv ASP, Inc., Ogden, Utah 84405-1563 (US)
(72) Inventor: Ricks, Merle R., Layton, Utah 84040 (US); Lamph, Richard W., Brimingham, Michigan 48009 (US); Adams, Gary V., Brigham City, Utah 84302 (US)
(74) Representative: Bankes, Stephen Charles Digby

(57) **Abstract**

An automotive steering wheel (10) is formed of a body (20) molded over an armature (12, 14, 16, 18) and defining a central recess (22). An inflator (42) and a folded airbag (44) are housed within the recess. A horn switch actuation member (48) in the form of a housing surrounds the folded airbag and is movable within the recess. At least one horn switch is mounted between the housing and the steering wheel for actuation when the housing is depressed.

## Description

This invention relates to the field of automotive airbags. More specifically, it relates to a driver's side airbag housed within the steering wheel and including a horn switch actuatable over a large regicn of the steering wheel.

The driver's side airbag of an automotive vehicle is customarily housed in the steering wheel. The airbag module may be an integral unit which rests within a recess in the steering wheel or it may be mounted in a cavity in a steering wheel which presents an unbroken surface to the driver's view.

In order to provide horn switches in such a steering wheel, several approaches have been taken. In one, horn switches are provided at locations away from the airbag such as, for example, portions of the wheel overlying the spokes. In another approach, thin membrane switches are molded into the steering wheel cover over the enclosed airbag. One problem with these approaches is that the regions on the steering wheel where the horn may be actuated are relatively limited and difficult to find in an emergency. Accordingly, In order to increase the horn switch area, another approach has been taken wherein the entire airbag module is mounted on an assembly within the steering wheel which includes spring mounted switch contacts. While this approach vastly increases the horn actuation area, it is relatively complex, requiring bolts, springs, and electrical contacts and requires that the entire airbag module "float" or move in order to close the electrical contacts. Furthermore, an entire airbag module is quite heavy and the arrangement for it to float must be such that an undue amount of pressure from the driver on the steering wheel cover is not required to move the airbag module and springs to bring the switch contacts together. On the other hand, when such an arrangement is provided that does not require a large amount of pressure to move the airbag module and springs, undesirable and unwanted closure of the switch contacts can occur when the vehicle hits potholes or bumps.

Accordingly, it is a primary object of the present invention to provide a driver's side airbag assembly which retains the advantages of an increased horn actuation region, while simplifying the structure and eliminating the requirement that the airbag module itself be movable. Other objects, features, and advantages will become apparent from the following description and appended claims.

In accordance with the present invention, the airbag module, including the inflator and the folded airbag, is fixedly mounted on the armature of the steering wheel. The horn switch actuation member surrounds the folded airbag and is movable independently of the folded airbag and the inflator. A horn switch is mounted intermediate the actuation member and the steering wheel and means are provided for resiliently separating the actuation member from the steering wheel, but yielding under pressure on the actuation member to actuate the horn switch.
FIG. **1** is a plan view of an automotive steering wheel in accordance with the present invention;
FIG. **2** is an enlarged cross-section taken substantially along the line 2-2 of FIG. **1**;
FIG. **3** is an enlarged segment of the drawing of FIG. **2**, illustrating a pair of horn switch contacts;
FIG. **4** is a view similar to FIG. **2** illustrating a further embodiment of the invention;
FIG. **5** is an enlarged cross-section of a segment of FIG. **4**, illustrating the switch contacts of the invention; and
FIG. **6** is a view similar to FIG. **5**, illustrating a further modification of the invention.

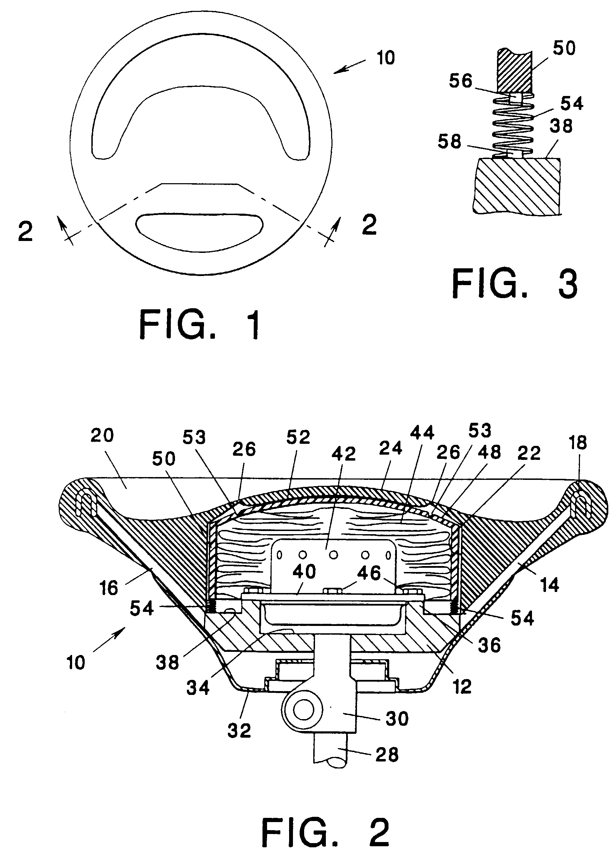

FIGS. **1** and **2** illustrate the basic features of the invention. They disclose a steering wheel **10** that is made up of an armature formed by a central metal hub plate **12** with one or more radial spokes **14, 16** and a circular rim **18**. The main body **20** of the wheel is a suitable PVC, polyurethane or plastic which is molded over the armature. In this modification, the body of the wheel is hollowed to form a central recess **22** within the body of the wheel above the hub plate **12** while leaving a thin cover **24** having tearlines **26** formed therein.

The hub plate **12** is mounted to a steering column **28** by conventional mounting means **30** which need not be further described. The rear of the steering wheel is enclosed by a substantially conical shroud **32**.

The hub plate **12** includes a recess **34** surrounded by a raised circumferential shoulder **36** which, in turn, forms the inner boundary of an annular floor **38**. The mounting ring **40** of a conventional inflator **42** is mounted on, and clamps the mouth of a folded airbag **44** against, the top surface of the shculder **36** by means of mounting bolts **46**.

A particular feature of this modification of the invention comprises a housing **48** having a sidewall **50** surmounted by a domed top **52** which rests against the inner surface of the steering wheel cover **24** and has tear lines **53** adjacent the tear lines **26** of the cover **24**. The housing **48** forms a switch actuation member and is freely movable within the recess **22** of the steering wheel but is urged upwardly against the cover **24** by resilient means such as a plurality of circumfentially arranged coil springs **54.** One such coil spring is illustrated in detail in FIG. **3**. In this illustration the sidewall **50** will be seen to carry a first horn switch contact **56.** Mounted on the floor **38** below the first horn switch contact is a second horn switch contact **58**. (It will be understood that necessary electrical insulation and conductors will also be present. However, these features are conventional and well known to those skilled in the art and, accordingly, are not illustrated.) There may be any desired number of such contact pairs around the periphery of the hub plate **12**. Furthermore, it will be understood that the switch contacts need not be positioned within or contiguous to the coil springs **54**. It will be apparent, however, that depression of any portion of the cover **24** which overlies the housing **48** will force the housing downwardly against the force of the springs **54**, thereby closing one or more pairs of switch contacts and actuating the horn. Furthermore this actuation is achieved without requiring movement of the airbag **44** or of the inflator **42**.

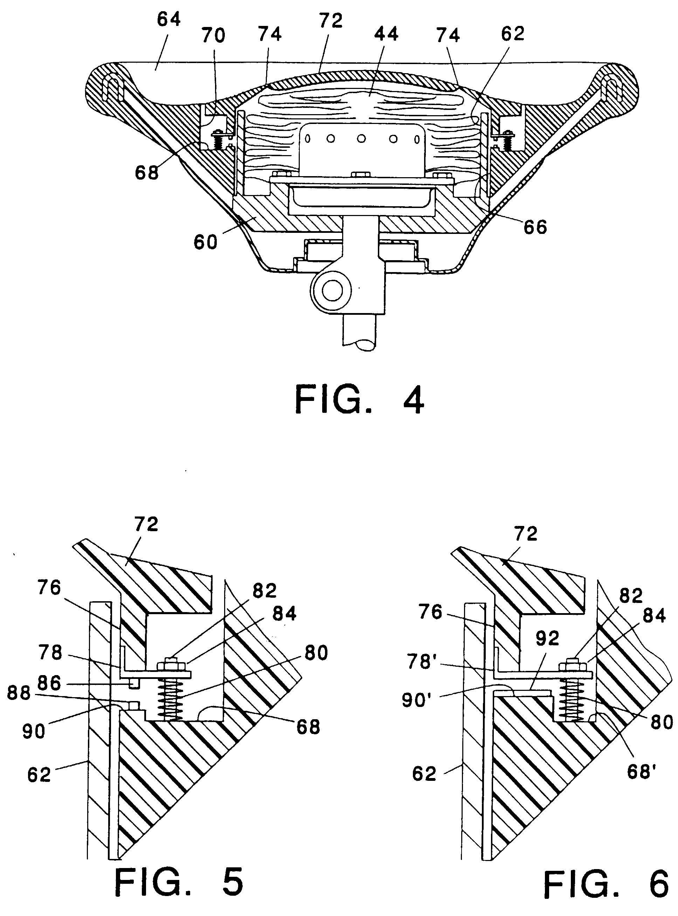

A second modification of the invention is illustrated in FIGS. **4** and **5**. In this modification, the hub plate **60** is similar to that of the FIG. **2** version but includes in addition an encircling wall **62** which encloses the airbag **44**. The molded body **64** of the steering wheel defines a central recess **66** which is closely adjacent the outer surface of the wall **62**. The first recess **66** terminates at an encircling floor **68** which extends outwardly to a larger recess **70** which extends to the front surface of the steering wheel. In this modification a separate cover **72** having tearlines **74** is housed within the recess **70** and includes a depending flange **76** which encircles the outer surface of wall 62 of the hub plate **60**. As will be seen more easily in FIG. **5**, the flange **76** carries a plurality of radially extending brackets **78** which are mounted on coil springs **80** supported by bolts **82** having nuts **84** serving as limit stops. Also mounted along the bottom of the flange **76** are a plurality of first switch contacts **86**. Mounted below each of the first switch contacts 86 is a second switch contact **88** on shoulder **90**. These contacts form a horn switch. It will now be apparent that depression of the cover **72** anywhere over its surface will force it inwardly against the force of the springs **80**, thereby making contact between at least one pair of first and second horn switch contacts.

FIG. **6** illustrates a still further modification of the invention. However, in this modification the bracket **78'** is lengthened to position the spring **80** farther outward. The floor **68'** is narrowed in order to permit a larger shoulder **90'**. Upon this shoulder **90'** is mounted a conventional membrane horn switch **92**. It will be obvious that, upon depression of the cover **72** as previously described, the bracket **78'** on flange **76** will depress and actuate membrane switch **92**. It will also be apparent that the membrane switches may be carried by the flange **76** and would operate in the same manner.

## Claims

1. A driver's side automotive airbag installation comprising a steering wheel (10) having a central cavity (22, 66) therein and an inflator (42) and folded airbag (44) housed within said central cavity, characterised by:
a horn switch actuation member (48, 72) surrounding said folded airbag and movable independently of said folded airbag and inflator;
an automotive horn switch (56, 58) mounted intermediate said horn switch actuation member and said steering wheel; and
means (54, 80) resiliently separating said actuation member from said steering wheel but yieldable under pressure on said actuation member to permit actuation of said horn switch.

2. An airbag installation according to claim 1 wherein said horn switch comprises a first electrical contact (56) carried by said actuation member (48) and a second electrical contact carried by said steering wheel (10).

3. An airbag installation according to claim 1 wherein said horn switch comprises a membrane switch (92) carried by one of said actuation member and said steering wheel.

4. An airbag installation according to any preceding claim wherein said resilient separating means (54, 80) comprises a spring.

5. An airbag installation according to any preceding claim wherein a steering wheel (10) has an armature (12, 14, 16, 18) and a body (20, 64) molded thereover defining the central cavity (22, 66) leaving a cover (24, 72) having tear lines (26, 74) therein.

6. An airbag installation according to claim 5 wherein the actuating member (48) comprises a housing having a sidewall (50) surrounding said inflator (42) and folded airbag (44) and a top (52) adjacent and underlying said cover (24), said housing being movable independently of said inflator and folded airbag and wherein the resilient separating means (54) is arranged to urge said housing top into engagement with said cover (24).

7. An airbag installation according to claim 6 comprising first horn switch contact means (56) carried by said housing (48) and second horn switch contact means (58) carried by said steering wheel whereby depression of said cover (24) forces said housing against said resilient separating means (54) to make electrical contact between said first and second horn switch contact means.

8. An airbag installation according to claim 5 which further comprises an encircling wall (62) formed on said armature (60) within and closely adjacent said central recess (66) and wherein the actuation member comprises the cover (72), said cover having a depending flange (76) thereon outwardly adjacent said encircling wall and said cover and flange being movable independently of said encircling wall, and wherein said resilient separating means (80) is arranged to urge said cover and flange outwardly of said steering wheel.

9. An airbag installation according to claim 8 wherein said horn switch comprises a first switch contact (86) carried by the flange (76) and a second switch contact (88) carried by the steering wheel, whereby pressure on said cover (72) makes electrical contact between said first and second horn switch contacts.

10. An airbag installation according to claim 8 wherein the horn switch comprises a membrane switch (92) and wherein pressure on the cover (72) presses the flange (76) against the membrane switch to activate it.
